# EUROPEAN PATENT SPECIFICATION

(11) **EP 3 452 848 B1**
(45) Date of publication and mention of the grant of the patent: **14.02.2024**
(21) Application number: 17716103.1
(22) Date of filing: 17.02.2017
(51) Int. Cl.: G01S 17/02, G01S 17/42, G01S 17/58, G01S 7/00, G08B 13/196

(54) **MONITORING METHOD USING A CAMERA SYSTEM WITH AN AREA MOVEMENT DETECTION**
ÜBERWACHUNGSVERFAHREN UNTER VERWENDUNG EINES KAMERASYSTEMS MIT EINER BEREICHSBEWEGUNGSDETEKTION
PROCÉDÉ DE SURVEILLANCE FAISANT APPEL À UN SYSTÈME DE CAMÉRA AVEC DÉTECTION DE MOUVEMENT DE ZONE

(30) Priority: 20.02.2016 CZ 20160095
(43) Date of publication of application: 13.03.2019
(73) Proprietor: Tacticaware, S.R.O., 61900 Brno (CZ)
(72) Inventor: VOJTEK, Martin, 25219 Rudna (CZ); STEFL, Jaroslav, 19000 Praha (CZ)
(74) Representative: Benda, Tomas
(86) International application number: PCT/CZ2017/050006
(87) International publication number: WO 2017/140285

(56) References cited:
- EP-A1- 2 518 709
- US-A1- 2006 028 548
- US-A1- 2010 053 330
- US-A1- 2010 321 500
- US-A1- 2012 038 456

## Description

### Background of the invention

The present invention concerns the monitoring method using a camera system with an area movement detection.

### State of the art

A rotational "Pan Tilt Zoom" camera, in short a PTZ camera, is a camera with possible remote horizontal and vertical rotation and with possible zoom function. The PTZ camera is manually controlled by keyboard or joystick. The PTZ camera is an integral part of supervise security camera systems. Those camera systems ensure to define pre-sets, i.e. user's predetermined positions of view of the camera, which are saved under specific dials. The user is able to bring out the pre-set manually by keyboard or automatically by specific control software, for example invoked by alarm event. Furthermore, the system enables to switch between predetermined positions, i.e. movement of the camera between predetermined positions. However, it doesn't mean movement of the camera into a new occurred point of interest.

Except of manual positioning of the PTZ camera and manual or automatic positioning of the PTZ camera by the pre-sets it is possible to move by the camera totally automatically by "Auto Tracking", i.e. a hardware built directly in the camera, which is intended to monitor changes of display spots generated by the recorded shot. If any pixels are changed in the range of the shot by movement of an object in the view range of the camera, the camera will concentrate on the changed pixels and will move to catch the moving pixels in to the centre of the camera chip, it means into the centre of the shot picture. The process leads to an automatic movement of the camera. The auto tracking can zoom in or zoom out the shot in order to stabilise size of the group of moving points in the predetermined range in relation to the whole shot of the camera. Because of that the camera is able to zoom into the area of movement without knowledge of precise size of the shot object and knowledge of distance between the object and the camera. When the camera lose the moving object, the camera is moved back into a predetermined position, where it is waiting until further moving pixels will be recognised, than the whole above described process is repeated again.

The auto tracking system concerns only moving pixels in the shot view of the camera, which is only a partial sector of the whole monitored view range of 360° of the PTZ camera. The camera knows nothing about a situation behind it. Because of that the auto tracking system can be abused by person, who entice the camera away by its movement, while the second person can break into the monitored area.

Because of that it is necessary to provide the PTZ camera with a further security monitoring system, which is able to direct the camera into the area of interest.

One solution of this problem is a system with passive infrared detectors. Such system is able to move the camera into the right direction, when the passive infrared detectors detect some movement. However, the system is not able to recognise distance between the object and the sensors, in the other words, it is not able to recognise if the object is close to the sensor or far away from it. Those sensors are not resistant to a bad wind condition, has a short range and reacts also to changes of temperature, for example caused by hot wind. Further disadvantage of the system is a necessity of arrangement of the detectors/sensors at the axes of the PTZ camera, because those systems detects only a direction from which the interruption is coming instead of the exact position of the interruption. The same bad characteristics are reached by use of a further static camera or a thermo camera, which works as a movement detector, in order to navigate the PTZ camera.

A document US20100053330 presents a camera system with movement detection, where a laser system LIDAR is used to collect 3D data, where the data, which are leaving the system, can be used for monitoring of a PTZ camera. The system is usable for movement detection to ensure security in the area of interest. Disadvantage of the presented system is that the system arranges a pivoting camera into the area of disturbance, whereas the camera is at the axes of the LIDAR detector. It is not suspected to connect two coordinate systems, i.e. the coordinate system LIDAR and the coordinate system PTZ, which is necessary for the case of use of the system with a camera arranged out of the axes of the detector, or if the system is connected to more cameras.

The aim of the present invention is to disclose a monitoring method using a camera system with an area movement detection, where above mentioned disadvantages of the state of the art are eliminated.

### Feature of the invention

Monitoring method using a camera system with an area movement detection, where the camera system comprises at least one PTZ camera with a native protocol and with a driver unit for pointing the camera to a point of interest in an area of interest, at least one detector for monitoring of the area of interest, a computer technology provided with a control software intended to create a dimensional coordinate grid of the area of interest on the bases of information gained from the detector about position of single points in the area of interest, where the computer technology is adapted to communicate with the PTZ camera and the detector, and which is further adapted to collect and evaluate the data and the information gained from the PTZ camera and the detector and to automatically set rotation of the PTZ camera with regards to the dimensional coordinates of the area of interest, whereas the data transmitted from the detector to the computer technology are in a form of UDP packets, which are comprising information about distance between scanned points and the detector, about a position of scanned points, about calibrated reflection of scanned points, about rotational angle of laser rays sent from the detector and reflected from the scanned points, about synchronised time marks of the laser rays of the detector and about GPS position of the scanned points, the method comprises steps, where the area of interest is scanned by the detector, than the scanned data of the area of interest are send to the computer technology provided with the control software, than a maximum speed of a motion and a minimum size of the object detectable by the detector, is defined, than the detector and the PTZ camera are positioned into the position, where monitoring of the area of interest is ensured, than the camera system is set in a such way, that if a movement in the area of interest is detected the PTZ camera is automatically pointed to the area, where the movement was detected, and scanning of another predetermined pre-alert zones with low priority is activated, where the moving object is tracked, whereas automatic turn of the PTZ camera into the point of movement in the area of interest is performed, where the camera system further comprises a switch intended to connect the PTZ camera, the detector and the computer technology provided with the control software, and the detector is a LIDAR detector, and the method further comprises steps, where after the scanned data of the area of interest are send to the computer technology the data are processed into the form of a digital model, i.e. 3D map, of the area of interest, than the scanned digital model of the area of interest is devided into pre-alert zones and a zone with high priority of protection, where in the pre-alert zones a detected object is only tracked, but in the zones with high priority an alarm is invoked, when an object is detected, and after the detector and the PTZ camera are positioned into the position, where monitoring of the area of interest is ensured, calibration of a view of the PTZ camera to a specific point in the 3D map with regards to the real position of the PTZ camera is performed by electronical compass provided in the PTZ camera, by software, or by hand, where the PTZ camera is directed to the point in the 3D map and calibrated to the point in the 3D map with regards to the real position of the PTZ camera.

### Description of the drawing

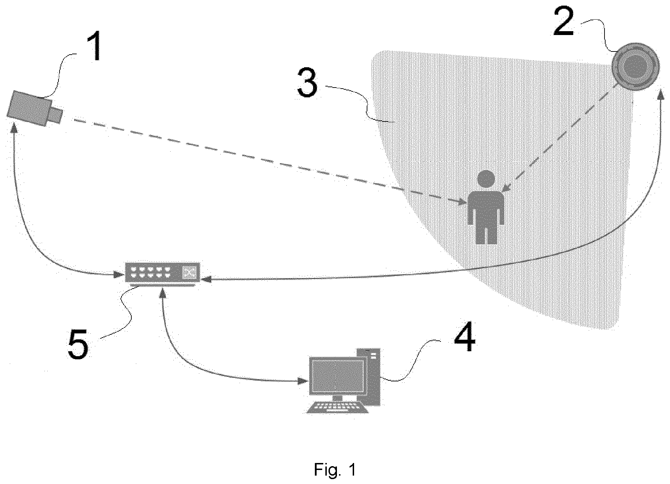

**The** invention will be further explained by using the drawing, in which Fig. 1 presents the camera system according to the invention.

### Feature of the invention

The camera system according to the invention creates a 3D map by method of remote measuring of distance by calculation of speed of a laser beam pulse reflected from a solid object. Usually a spectrum which is close to infrared spectrum is used. A laser beams are resistant to bad wind conditions such as fog and snowfall. Those are not influenced by changes of temperature, shadows and so on. A user has an opportunity to decide, which area will be monitored, on the bases of the 3D map. The system enables precise definition of an area of interest not only by 2D horizontal map but also by complete 3D map. If a disturbance is detected in the farer distance than is a defined distance of the area, such alert will be repressed.

**The** system responds only to increased number of moving points. Those points represent moving objects and its precise parameters, i.e. position in the map or GPS coordinates.

Fig. 1 presents the camera system with an area movement detection according to the invention, comprising at least one PTZ camera 1 with a driver intended to direct the camera, at least one individual LIDAR detector 2, which is separated from the PTZ camera, and which monitors an area 3 of interest, and a computer technology 4 with a control software, i.e. a control unit, which communicates with the PTZ camera 1 and the detector 2. The computer technology 4:
- collects data/ information gained by the PTZ camera 1 and the detector 2,
- processes the data and creates a dimensional coordinate grid of the area 3 of interest, and
- automatically defines rotation of the PTZ camera 1 according to coordinates of the point of interest. The point of interest is a point, which is monitored in the common regime or a point, where a movement or any other interruption was occurred.

Both devices, i.e. the PTZ camera 1 and the detector 2, are IP devices connected by network active element, i.e. a switch, to a local computer network LAN to which also the computer technology 4 is connected.

It is possible to move by the detector 2 to get a 3D model of the whole surrounding, and even those places, which will be not monitored. The 3D map is created by points stored at any time. A more precise and detailed 3D grid is possible to be reached by movement of the detector 2. However, such volume of data is difficult to be processed. The data processing is carried out only during initialisation of the system or when objects in the monitored area is replaced by order of a caretaker of the area or automatically on the bases of a script. The performed map is intended for easy orientation of the caretaker in the monitored area. For the detection process a "raw data" presented in the pre-scanned 3D map are used. Because of visualisation reason the data can be differentiated from the 3D map by colour.

When the PTZ camera 1 is to be target it's position has to be known - i.e. a "zero position", it means its horizontal and vertical turn measured in degrees, and a value of zoom measured defined by value of a shot angle. However, commonly used PTZ cameras use co called "Pelo D" protocol, which enables precise turning of it. With regards to the camera system according to the invention, it is necessary to turn the PTZ camera 1 by so called a "native" protocol and a specially configured controller, which means by a protocol issued by producer of the camera system intended to ensure communication between the control software and the PTZ camera 1. Due to that automatic pivoting and zooming of the PTZ camera 1 into a point of interest, on the bases of an order specified by above mentioned values of vertical and horizontal turn and value of zoom, is performed.

The PTZ camera 1 has the zero position set by producer, for example performed by magnetic contact placed in its body.

Advantageously, the PTZ camera 1 can be provided by electronical compass for the reason of calibration. When the camera 1 is installed and initialled, it means when the camera is automatically arranged at the zero position, the needle of the compass is turned into the direction of the camera 1. By that way an information about deviation between pre-set value of the zero position of the PTZ camera 1, a horizontal grid and the needle of the compass is transmitted to the system. The deviation will be added or subtracted whenever the PTZ camera 1 will be directed to a new desired point of interest.

The second option of synchronisation of the position of the PTZ camera 1 with regards to the 3D map is provided only by software. The PTZ camera 1 can be directed to the point in the 3D map by hand and calibrated to the point in the 3D map with regards to the real position of the PTZ camera 1 after the 3D map is scanned. For better orientation of the operator within the map it is possible to use a targets with a reflective surface. The laser detector 2 returns the reflection reflected from the reflective surface with an indication of a calibrated reflection. Those places can be presented in the 3D map by different colour.

A method of installation and setting of the camera system according to the invention is presented below:
- In the first stage, an area 3 of interest and its surrounding is scanned by a detector 2. A processed outcome of the scanning process is a quantity of points, which can be interpolated into a digital model of a surface or into a 3D model of a building or other objects.
- Afterwards the detector 2 is arranged so as to scan the area 3 of interest.
- Furthermore a pivoting PTZ camera 1 is installed in such way, that its position ensures scanning of the area 3 of interest. It is not necessary to arrange the PTZ camera 1 at the axes of the detector 2.
- Calibration of a view of the PTZ camera 1 with regards to the scanned digital model of the area 3 of interest is performed by the computer technology 4.
- Afterwards, the pivoting PTZ camera 1 are pointed to the point of interest by the computer technology 4 with accuracy +/- 3cm. That setting can be manual, by pointing to the point in the scanned grid, or automatic, invoked when the area is violated by moving object. The system knows an exact position of each moving point and its distance from the detector 2.

Above mentioned steps of the method can be performed in a different order or not performed at all.

It is possible to define more specific zones in the scanned digital model of the area 3 of interest. If movement in those zones is recognised it is possible to respond by action performed by the control system of the computer technology 4, for example by definition of pre-alert zones, where the system follows the moving object, but where an alarm is not invoked. The alarm is invoked when the object is detected in a zone with higher priority of protection.

A minimum size of a detectable object can be defined in the scanned digital model of the area 3 of interest. Possible definition of minimum size of a detected object depends on a distance between the object and the detector 2, respective on density of the grid.

A maximum speed of a detectable object can be defined in the scanned digital model of the area 3 of interest. It is effective way how to eliminate a false alarm caused by for example a flying bird.

If the detector 2 recognise a movement in the area 3 of interest, the system turns the PTZ camera 1 into the area and activates a system of video detection. Activation of alarm is postponed until existence of the movement in the camera shot is confirmed, or is activated immediately. The impulse for turning the PTZ camera 1 is a signal transmitted from the computer technology 4 by controller.

In the advantageous embodiment parameters of the detector of the camera system according to the invention are defined as follows:
- The detector 2 is a LIDAR detector comprising 16 canals, i.e. laser beams. A system equipped by such detector is able to define a grid with up to 57600 points. 288000 points per second are detected if speed is 5Hz. It is possible to use a detector 2 with 32 or 64 canals, i.e. laser beams, if a brother grid is required.
- Accuracy of detection is +/- 3cm. Accuracy of a multichannel detector is up to +/- 2cm.
- Angle of a shot is in the vertical point of view from +15° to -15° and from horizontal point of view 360°.
- Vertical resolution is 2°. Vertical resolution of a multichannel detector can be up to 0,3°.
- Horizontal resolution is 0,1° to 0,4°. Horizontal resolution of a multichannel detector can be up to 0,09°.
- Pivoting speed is 5 to 20 Hz.
- The laser used in the presented embodiment has length of wave 905 nm, which is defined as a laser of low energy, i.e. the first class of classification. The first class is safe under all conditions. There is no health risk if a person look accidentally directly into a laser beam, because there is not exceeded a maximal expectable value of radiation, i.e. "MPE".
- A covering of the detector 2 is IP67.
- Outcome speed of shooting is 0,3 billion points per second.
- The detector 2 sends data to the computer technology 4 in a form of UDP packets comprising information about distance of the scanned points from the detector 2, about position of the scanned points, about calibrated images of shot points, about rotary angle of laser beams dispatched from the detector 2 and reflected from scanned points, and about GPS positions of scanned points.

In the advantageous embodiment the parameters of the PTZ camera 1 of the camera system according to the invention are defined as follows:
- A camera chip of the PTZ camera 1 is CMOS ½8" HD ensures better shot function even in bad visibility condition.
- Resolution is advantageously Full HD 1920x1080P.
- Advantageously, there is used an optical zoom with thirty times zoom possibility.
- Horizontal pivoting speed is 240°/s and vertical pivoting speed is 200°/s.

All above mentioned parameters are only advantageous embodiments. Each of the parameters can be used to exclude the others. The camera system according to the invention works with any pivoting PTZ camera even with different parameters.

Example of horizontal distance between single beams of the detector 2, where the angle is 2°, is 10m/35cm, 20m/70cm, 30m/105cm, 40m/140cm, 50m/174cm, 60m/209cm, 70m/244cm, 80m/279cm, 90m/314cm, 100m/349cm.

Example of vertical distance between single beams of the detector 2, when the angle is 0,1°, is 10m/2cm, 20m/3cm, 30m/5cm, 40m/7cm, 50m/9cm, 60m/10cm, 70m/12cm, 80m/14cm, 90m/16cm, 100m/17cm.

If the detector 2 is arranged in height 25m a detective cylinder with diameter 100m and height 51m is created, i.e. with horizontal coverage 360° and a vertical coverage 30°.

Advantage of presented camera system according to the invention is easy and intuitive control, and simplicity of the first calibration.

Density of the horizontal grid between single beams is sufficient also for a long distance. For a distance 60m from the detector 2 is vertical scattering of the beams only 10cm. For maximal distance 100m from the detector 2 is vertical scattering of the beams only 17cm. Because of the above mentioned density of the beams secure detection of persons is ensured even for the maximum distance.

Vertical dispatch of 16 beams ensures detection of persons for a maximum distance 50m, where difference between single scanned layers is 174cm. Two times higher density of the grid is provided by mechanical movement of the whole detector 2, for example vertically by +1° and after that again vertically -1° with speed 5Hz. Advantageously it is possible to use a 32 or 64 laser beam version of the camera system according to the invention with two or four time higher density of the grid.

Because of very easy calibration and an intuitive control software it is possible to use the whole system also as a mobile system. In such case, the pivoting PTZ camera 1 and the detector 2 is equipped by stative, i.e. "tripody". The pivoting PTZ camera 1 and the detector 2 can be connected wirelessly to a local network LAN. By scanning of a secured area by the detector 2, the operator get an exact map and a 3D model of the secured area. Because of that, difficult upload and calibration of a stationary map is not necessary, as it is known from the mobile systems known from the state of the art.

## Claims

1. Monitoring method using a camera system with an area movement detection, where the camera system comprises:
- at least one PTZ camera (1) with a native protocol and with a driver unit for pointing the camera to a point of interest in an area of interest,
- at least one detector for monitoring of the area of interest,
- a computer technology (4) provided with a control software intended to create a dimensional coordinate grid of the area (3) of interest on the bases of information gained from the detector (2) about position of single points in the area (3) of interest, where the computer technology (4) is adapted to communicate with the PTZ camera (1) and the detector (2), and which is further adapted to collect and evaluate the data and the information gained from the PTZ camera (1) and the detector (2) and to automatically set rotation of the PTZ camera (1) with regards to the dimensional coordinates of the area (3) of interest,
- whereas the data transmitted from the detector (2) to the computer technology (4) are in a form of UDP packets, which are comprising information about distance between scanned points and the detector (2), about a position of scanned points, about calibrated reflection of scanned points, about rotational angle of laser rays sent from the detector (2) and reflected from the scanned points, about synchronised time marks of the laser rays of the detector (2) and about GPS position of the scanned points,
the method comprises steps, where:
- the area (3) of interest is scanned by the detector (2), than
- the scanned data of the area (3) of interest are send to the computer technology (4) provided with the control software, than
- a maximum speed of a motion and a minimum size of the object detectable by the detector (2) is defined, than
- the detector (2) and the PTZ camera (1) are positioned into the position, where monitoring of the area (3) of interest is ensured, than
- the camera system is set in a such way, that if a movement in the area (3) of interest is detected:
- the PTZ camera (1) is automatically pointed to the area, where the movement was detected, and
- scanning of another predetermined pre-alert zones with low priority is activated, where the moving object is tracked,
- whereas automatic turn of the PTZ camera (1) into the point of movement in the area (3) of interest is performed,
**characterised in, that**
the camera system further comprises:
- a switch (5) intended to connect the PTZ camera (1), the detector (2) and the computer technology (4) provided with the control software, and
- the detector (2) is a LIDAR detector,
and the method further comprises steps, where:
- after the scanned data of the area (3) of interest are send to the computer technology (4) the data are processed into the form of a digital model, i.e. 3D map, of the area (3) of interest, than
- the scanned digital model of the area (3) of interest is devided into pre-alert zones and a zone with high priority of protection, where in the pre-alert zones a detected object is only tracked, but in the zones with high priority an alarm is invoked, when an object is detected, and
- after the detector (2) and the PTZ camera (1) are positioned into the position, where monitoring of the area (3) of interest is ensured, calibration of a view of the PTZ camera (1) to a specific point in the 3D map with regards to the real position of the PTZ camera (1) is performed by electronical compass provided in the PTZ camera (1), by software, or by hand, where the PTZ camera (1) is directed to the point in the 3D map and calibrated to the point in the 3D map with regards to the real position of the PTZ camera (1).

## Patentansprüche

1. Überwachungsverfahren unter Verwendung eines Kamerasystems mit einer Bereichsbewegungsdetektion, umfassend mindestens:
- eine PTZ Kamera mit einem Nativprotokoll und mit einem Treiber, der ihre Aussteuerung an den Interessenpunkt im Interessengebiet ermöglicht,
- mindestens einen das Interessengebiet aufnehmenden Detektor,
- eine Rechentechnik (4) mit einem zur Bildung von Raumkoordinatennetz des Interessengebiets (3) angepassten Steuersoftware aufgrund vom Detektor (2) gewonnenen Informationen über die Positionen einzelner Punkte im Interessengebiet (3), in dem die Rechentechnik mit PTZ Kamera und Detektor kommuniziert, und die zum Sammeln und zur Auswertung von Daten und Informationen gewonnenen von PTZ Kamera und Detektor, und weiter zur automatischen Verdrehungseinstellung von PTZ Kamera (1) laut Raumkoordinaten vom Interessengebiet (3) angepasst ist,
- wobei die aus Detektor (2) in die Rechentechnik (4) ankommenden Daten in der Form von UDP Paketen sind, die die Information über die Ferne von aufnehmenden Punkten vom Detektor (2), über die Position von aufnehmenden Punkten, über die kalibrierte Reflexion von aufnehmenden Punkten, über die Drehwinkel der von Detektor (2) emittierten und von aufnehmenden Punkten reflektierten Laserstrahlen, über die synchronisierten Zeitstempel von Laserstrahlen des Detektors (2) und über GPS Positionen von aufnehmenden Punkten umfassen,
wo diese Methode folgende Schritte umfasst, wobei:
- mit Hilfe vom Detektor (2) wird das Interessengebiet (3) gescannt,
- eingescannte Daten von Interessengebiet (3) werden in die Rechentechnik (4) mit Steuersoftware gesendet,
- die maximale Bewegungsgeschwindigkeit und die minimale Größe von dem vom Detektor (2) aufnehmenden Objekt werden definiert,
- der Detektor (2) und die PTZ Kamera werden in die Lage installiert, die das Aufnehmen von Interessengebiet (3) ermöglicht,
- das Kamerasystem wird so eingestellt, dass falls im Interessengebiet eine Bewegung erkannt ist:
- PTZ Kamera (1) wird automatisch an die Stelle mit erkannter Bewegung gerichtet, und
- die Überwachung weiterer vorgestellten Voralarmzonen mit niedriger Priorität, in denen ein bewegendes Objekt überwacht wird, gestartet wird,
- wobei die PTZ Kameraverdrehung (1) und an die Stelle mit Bewegung im Interessengebiet (3) automatisch verläuft,
**wird dadurch gekennzeichnet, dass**
das Kamerasystem weiter beträgt:
- Schalter (5) verbindender die PTZ Kamera (1), den Detektor (2) und die mit Steuersoftware versehene Rechentechnik (4),
- wo der Detektor (2) LIDAR Detektor ist,
und die Methode weiter folgende Schritte beträgt, wo:
- nachdem die eingescannten Daten von Interessengebiet (3) in die Rechentechnik (4) gesendet werden, werden diese in ein Digitalmodell verarbeitet, d. h. in eine 3D-Karte von dem Interessengebiet (3),
- ferner wird das eingescannte Digitalmodell von Interessengebiet (3) in die Voralarmzonen und die Zonen mit höher Schutzpriorität verteilt, wo das in den Voralarmzonen erkannte Objekt nur überwacht wird, während bei Detektion von einem Objekt in einer Zone mit höher Schutzpriorität ein Alarm ausgelöst wird, und
- nachdem der Detektor (2) und die PTZ Kamera (1) in die Lage, die die Überwachung vom Interessengebiet (3) ermöglicht, eingestellt werden, wird die Kalibrierung der Sicht von der PTZ Kamera (1) hinsichtlich zu einem bestimmten Punkt der 3D-Karte mit Hinsicht zu der realen Position von der PTZ Kamera (1), mit Hilfe elektronischen Kompass der PTZ Kamera (1), und zwar durch Software oder händisch, wobei die PZT Kamera (1) an die Stelle auf der 3D-Karte gerichtet ist und zum Punkt auf der 3D-Karte hinsichtlich zu realer Position der PZT Kamera (1) kalibriert wird, durchgeführt.

## Revendications

1. Procédé de surveillance à l'aide d'un système de caméra avec une détection de mouvement dans une zone, où le système de caméra comprend :
- au moins une caméra (1) PTZ ayant un protocole natif et une unité d'entrainement pour pointer la caméra vers un point d'intérêt dans une zone d'intérêt,
- au moins un détecteur pour une surveillance de la zone d'intérêt,
- une technologie (4) informatique pourvue d'un software de contrôle destiné à créer une grille de coordonnées dimensionnelles de la zone (3) d'intérêt sur les bases d'informations, tirées du détecteur (2) sur la position de points uniques dans la zone (3) d'intérêt, où la technologie (4) informatique est conçue pour communiquer avec la caméra (1) PTZ et avec le détecteur (2), et qui est conçue de plus pour recueillir et évaluer les données et les informations tirées de la caméra (1) PTZ et du détecteur (2) et pour automatiquement définir la rotation de la caméra (1) PTZ par rapport aux coordonnées dimensionnelles de la zone (3) d'intérêt,
- alors que les données transmises du détecteur (2) à la technologie (4) informatique se présentent sous une forme de paquets UDP qui comprennent des informations sur la distance entre les points balayés et le détecteur (2), sur une position des points balayés, sur une réflexion calibrée des points balayés, sur un angle de rotation des rayons laser, envoyés du détecteur (2) et réfléchis par les points balayés, sur des références de temps synchronisés des rayons laser du détecteur (2) et sur une position GPS des points balayés,
le procédé comprend des étapes, où :
- la zone (3) d'intérêt est balayée par le détecteur (2), puis
- les données balayées de la zone (3) d'intérêt sont envoyées à la technologie (4) informatique pourvue du software de contrôle, puis
- une vitesse maximale de la motion et une dimension minimale de l'objet détectable par le détecteur (2) est définie, puis
- le détecteur (2) et la caméra (1) PTZ sont placés dans la position où une surveillance de la zone (3) d'intérêt est assurée, puis
- le système de caméra est réglé de telle manière que si un mouvement dans la zone (3) d'intérêt est détecté :
- la caméra (1) PTZ est automatiquement pointée vers la zone où le mouvement a été détecté, et
- un balayage d'autres zones pré-alerte prédéterminées avec une faible priorité est activé, où l'objet en mouvement est suivi,
- alors qu'une rotation automatique de la caméra (1) PTZ vers le point de mouvement dans la zone (3) d'intérêt est effectué,
**caractérisé en ce que** le système de caméra comprend de plus :
- un commutateur (5) destiné à connecter la caméra (1) PTZ, le détecteur (2) et la technologie (4) informatique, pourvue du software de contrôle, et
- le détecteur (2) est un détecteur LIDAR,
et le procédé comprend de plus des étapes, où :
- après que les données balayées de la zone (3) d'intérêt sont envoyées à la technologie (4) informatique, les données sont transformées dans la forme d'un modèle numérique, c'est-à-dire une carte 3D, de la zone (3) d'intérêt, puis
- le modèle numérique balayé de la zone (3) d'intérêt est divisé en zones pré-alerte et une zone ayant une haute priorité de protection, où dans les zones pré-alerte un objet détecté est seulement suivi, mais dans les zones ayant une haute priorité une alarme est déclenchée dès qu'un objet est détecté, et
- après que le détecteur (2) et la caméra (1) PTZ sont placés dans la position où une surveillance de la zone (3) d'intérêt est assurée, une calibration d'une vue de la caméra (1) PTZ vers un point spécifique sur la carte 3D par rapport à la position réelle de la caméra (1) PTZ est effectuée par une boussole électronique disposée dans la caméra (1) PTZ, par un software ou manuellement, où la caméra (1) PTZ est dirigée vers le point sur la carte 3D et calibrée au point sur la carte 3D par rapport à la position réelle de la caméra (1) PTZ.
